(19) Europäisches Patentamt
European Patent Office
Office européen des brevets

(11) **EP 3 805 790 A1**

(12) **EUROPÄISCHE PATENTANMELDUNG**

(43) Veröffentlichungstag:
**14.04.2021 Patentblatt 2021/15**

(51) Int Cl.:
*G01S 7/481* (2006.01)    *G01S 17/42* (2006.01)

(21) Anmeldenummer: **20196561.3**

(22) Anmeldetag: **17.09.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **08.10.2019 DE 102019126982**

(71) Anmelder: **SICK AG**
**79183 Waldkirch (DE)**

(72) Erfinder: **Russ, Thomas**
**79211 Denzlingen (DE)**

(54) **OPTOELEKTRONISCHER SENSOR UND VERFAHREN ZUR ERFASSUNG VON OBJEKTEN**

(57) Es wird ein optoelektronischer Sensor (10) zur Erfassung von Objekten in einem Überwachungsbereich (20) angegeben, der mindestens einen Lichtsender (22) zum Aussenden mehrerer voneinander separierter Lichtstrahlen (26a-d), eine Sendeoptik (24) für die ausgesandten Lichtstrahlen (26a-d), mindestens einen Lichtempfänger (32) zum Erzeugen eines jeweiligen Empfangssignals aus den von Objekten remittierten Lichtstrahlen (28a-d), eine Empfangsoptik (30) für die remittierten Lichtstrahlen (28a-d) und eine Steuer- und Auswertungseinheit (40) zur Gewinnung von Informationen über die Objekte aus den Empfangssignalen aufweist, wobei die Sendeoptik (24) und/oder die Empfangsoptik (30) ein erstes optisches System (44) aufweist. Dabei weist die Sendeoptik (24) und/oder die Empfangsoptik (30) ein zweites optisches System (46) zur Korrektur von Abbildungsfehlern mit mehreren optischen Korrekturelementen (46a-d) auf, die jeweils einem Lichtstrahl (26a-d, 28a-d) zugeordnet sind, und das zweite optische System (46) ist zwischen einer Strahltrennungsebene (50), ab der die Lichtstrahlen (26a-d, 28a-d) aufgrund der optischen Wirkung des ersten optischen Systems (44) einander nicht überlappen, und dem Lichtsender (22) und/oder Lichtempfänger (32) angeordnet.

Figur 1

EP 3 805 790 A1

**Beschreibung**

Die Erfindung betrifft einen optoelektronischen Sensor und ein Verfahren zur Erfassung von Objekten in einem Überwachungsbereich nach dem Oberbegriff von Anspruch 1 beziehungsweise 15.

Viele optoelektronische Sensoren arbeiten nach dem Tastprinzip, bei dem ein Lichtstrahl in den Überwachungsbereich ausgesandt und der von Objekten zurückgeworfene Lichtstrahl wieder empfangen wird, um dann das Empfangssignal elektronisch auszuwerten. Dabei wird oft die Lichtlaufzeit mit einem bekannten Phasen- oder Pulsverfahren gemessen, um den Abstand eines angetasteten Objekts zu bestimmen.

Um den Messbereich eines einstrahligen Lichttasters zu erweitern, kann einerseits der Abtaststrahl bewegt werden, wie dies in einem Laserscanner geschieht. Dort überstreicht ein von einem Laser erzeugter Lichtstrahl mit Hilfe einer Ablenkeinheit periodisch den Überwachungsbereich. Zusätzlich zu der gemessenen Abstandinformation wird aus der Winkelstellung der Ablenkeinheit auf die Winkellage des Objektes geschlossen, und damit ist der Ort eines Objektes in dem Überwachungsbereich in zweidimensionalen Polarkoordinaten erfasst.

Eine andere Möglichkeit zur Messbereichserweiterung und zur Gewinnung zusätzlicher Abstandsdaten besteht darin, zugleich mehrere Messpunkte mit mehreren Abtaststrahlen zu erfassen. Das lässt sich auch mit einem Laserscanner kombinieren, der dann nicht nur eine Überwachungsebene erfasst, sondern über eine Vielzahl von Überwachungsebenen einen dreidimensionalen Raumbereich. In den meisten Laserscannern wird die Abtastbewegung durch einen Drehspiegel erreicht. Gerade bei Verwendung mehrerer Abtaststrahlen ist aber im Stand der Technik auch bekannt, stattdessen den gesamten Messkopf mit Lichtsendern und Lichtempfängern rotieren zu lassen, wie dies beispielsweise in DE 197 57 849 B4 beschrieben ist.

Prinzipiell lassen sich mehrere Abtaststrahlen durch Vervielfältigung der Bauteile eines einstrahligen Geräts erreichen. Das ist aber unnötig aufwändig und komplex. Daher gibt es im Stand der Technik Ansätze, Bauteile mehrfach zu nutzen. So werden in der DE 10 2015 121 839 A1 die Abtaststrahlen mehrerer Lichtsender durch eine gemeinsame Sendeoptik geformt und in die gewünschte Richtung abgelenkt.

Die US 8 767 190 B2 wählt den Ansatz, für jede Abtastebene einen eigenen Lichtsender und Lichtempfänger vorzusehen. Damit besteht dann prinzipiell die Möglichkeit, jede einzelne Abtastebene wie gewünscht einzujustieren. Das System ist zwar hoch flexibel, jedoch nur um den Preis eines enormen Aufwands für die Bauteile und die jeweilige individuelle Justage.

Nun ist es zwar wünschenswert, eine gemeinsame Optik für mehrere Strahlen gleichzeitig zu verwenden. Dabei werden aber widersprüchliche Anforderungen an die Optik gestellt. Sie soll einerseits aus Kostengründen möglichst einfach sein, andererseits aber in einem möglichst großen Bildfeld alle Strahlen gleichzeitig scharf abbilden. Eine einfache Optik lässt sich mit Hilfe einer Einzellinse realisieren. Damit ist aber unter den gegebenen Randbedingungen einer ausreichend großen Apertur nur ein kleiner Bildfeldwinkelbereich möglich. Folglich können mit einer Einzellinse nur dicht liegende Abtaststrahlen realisiert werden. Bei einem sinnvollen gegenseitigen Abstand von einigen Grad ermöglicht eine Einzellinse nicht mehr als zwei oder drei Abtaststrahlen. Andererseits besteht auch die Möglichkeit, auf eine einfache Optik zu verzichten und ein mehrlinsiges Objektiv zu verwenden. Damit können kleine Punktbilder auch über einen größeren Bildfeldwinkel erzeugt werden. Allerdings bedeutet das einen erheblichen Aufwand für die Herstellung und Justage mehrerer Linsen.

Die EP 3 182 153 B1 schlägt einen zusätzlichen Designfreiheitsgrad der Empfangsoptik durch eine Höhenstrukturierung auf dem Lichtempfänger vor. Das schließt aber die Anwendung von flachen Standard-Lichtempfängern auf. In einer Ausführungsform wird die Höhenstruktur mittels eines durchsichtigen gestuften Bauteils erreicht. Eine ähnliche Lösung wird in der JP 2007/094168 A vorgeschlagen. Auf diese Weise lassen sich aber nicht alle Abbildungsfehler kompensieren, insbesondere kein Astigmatismus.

Die noch unveröffentlichte deutsche Patentanmeldung mit dem Aktenzeichen 102018125826.7 verwendet ein zweilinsiges Objektiv, das für die Abbildung eines Kreisrings optimiert ist. Das ist aber nur unter der einschränkenden Bedingung sinnvoll einsatzbar, dass die Lichtempfänger ebenfalls kreisförmig angeordnet sind.

Neben der Abbildungsqualität der Empfangsoptik spielt für eine hochwertige Erfassung auch das Verhältnis von Nutzlicht zu Fremdlicht eine wichtige Rolle. Das gilt besonders für hochempfindliche Lichtempfänger mit der Fähigkeit, einzelne Photonen zu erfassen (SPAD, Single Photon Avalanche Photodiode oder SiPM, Silicon Photomultiplier). Um dieses Verhältnis zu verbessern, kann empfangsseitig mit Hilfe eines Blendenarrays in der Brennebene der Optik ein diskretes Sichtfeld definiert werden. Die Blendenöffnungen entsprechen den mehreren Empfangsstrahlen, und je kleiner deren einzelner Blendendurchmesser ist, ohne auch Nutzlicht abzuschirmen, desto besser wird das Verhältnis.

Um den Blendendurchmesser so klein wie möglich zu gestalten, sind verschiedene Parameter in Betracht zu ziehen, wie Justagegenauigkeiten, Winkelausdehnung des Lichtsenders, thermisches Verhalten und Toleranzen des optomechanischen Systems sowie die nominelle Abbildungsgüte der Optik. Es wurde bereits angesprochen, dass die Optik nur bei aufwändigem Objektivdesign kleine Spotdurchmesser über einen größeren Bildfeldwinkel leisten kann. Eine entsprechend aufwändige Optik ist auch vor dem Sender erforderlich, da sendeseitige Winkelfehler zu größeren empfangsseitigen Spots und damit Blendenöffnungen führen.

Die US 2017/0289524 A1 offenbart ein optisches System zum Erfassen von Abstandsinformationen. Empfangsseitig ist eine große Empfangslinse mit einem Blendenarray vorgesehen. Aufgrund der unvermeidbaren Abbildungsfehler der Empfangslinse können die Blendenöffnungen nicht klein werden. Hinter der Brennebene der Empfangslinse und dem Blendenarray ist noch ein Mikrolinsenarray vorgesehen, um den Strahlengang zur weiteren Fremdlichtunterdrückung mit einem nachgeordneten Interferenzfilter zu kollimieren. Es ist nicht die Funktion der Mikrolinsen und könnte in dieser Anordnung auch nicht ihre Funktion sein, die optische Abbildung vor der Blende zu verbessern. Die Mikrolinsen besitzen alle dieselbe Kontur und sind damit auch in ihren optischen Eigenschaften nicht zur Korrektur von Abbildungsfehlern in der Lage.

Die noch unveröffentlichte deutsche Patentanmeldung mit dem Aktenzeichen 102018109544.9 beschreibt verschiedene Designmöglichkeiten für Anordnung und Form von Blenden in einem gattungsgemäßen mehrstrahligen System, mit denen Fremdlicht effizient reduziert werden kann. Die Abbildung der Empfangsoptik vor den Blenden wird dabei jedoch nicht verbessert.

In der noch unveröffentlichten deutschen Patentanmeldung mit dem Aktenzeichen 102018118653.3 wird ein zusätzliches lichtzerstreuendes optisches Element der Empfangsoptik vorgeschlagen, mit dem der Einfallswinkel auf ein schmalbandiges Filter reduziert wird. Dadurch soll ein schmaleres Durchlassband ermöglicht werden, das sich mit dem Einfallswinkel verschieben würde. Auch das verbessert nicht die Abbildung der Empfangsoptik selbst.

Die DE 10 2017 129 100 A1 zeigt einen weiteren mehrstrahligen Laserscanner mit einer Konzentrator-Optik zum empfangsseitigen Zusammenführen der Empfangsstrahlen. Auch damit wird das Problem der Abbildungseigenschaften der Empfangsoptik nicht gelöst.

Ein Laserscanner ist üblicherweise durch eine umlaufende Frontscheibe oder Haube beispielsweise in Form eines Zylinders geschützt. Die Frontscheibe verzerrt den Strahlengang. Um das zu korrigieren, ist beispielsweise eine aufwändige bikonische Asphäre erforderlich. Die noch unveröffentlichte europäische Anmeldung mit dem Aktenzeichen 19158884.7 schlägt vor, den Drehspiegel eines Laserscanners so zu konturieren, dass diese Verzerrungen kompensiert werden.

Es ist daher Aufgabe der Erfindung, ein gattungsgemäßes Mehrstrahlsystem zu vereinfachen und zu verbessern.

Diese Aufgabe wird durch einen optoelektronischen Sensor und ein Verfahren zur Erfassung von Objekten in einem Überwachungsbereich nach Anspruch 1 beziehungsweise 15 gelöst. Der erfindungsgemäße Sensor ist ein Mehrfachtaster, der mit mindestens einem Lichtsender mehrere Lichtstrahlen durch eine Sendeoptik hindurch aussendet. Die ausgesandten Lichtstrahlen sind nicht als Strahlen im Sinne der Strahlenoptik innerhalb eines größeren Lichtbündels zu verstehen, sondern als voneinander separierte Lichtbündel und somit vereinzelte Abtaststrahlen, die im Überwachungsbereich beim Auftreffen auf ein Objekt entsprechend vereinzelte, voneinander beabstandete Lichtflecken erzeugen. Die aus dem Erfassungsbereich zurückkehrenden remittierten Lichtstrahlen werden von einer Empfangsoptik auf einen Lichtempfänger geführt, der ein jeweiliges Empfangssignal aus den remittierten Lichtstrahlen erzeugt. Die derart erzeugten Empfangssignale werden ausgewertet, um Informationen über das Objekt zu gewinnen. Die Sende- und/oder Empfangsoptik weist ein erstes optisches System auf. Im Falle einer gemeinsamen Sende-Empfangsoptik ist es dasselbe optische System, weisen andernfalls sowohl Sende- und Empfangsoptik ein erstes optisches System auf, so gibt es folglich jeweils ein erstes optisches System.

Die Erfindung geht von dem Grundgedanken aus, in der Sende- und/oder Empfangsoptik ein zweites optisches System zur Korrektur von Abbildungsfehlern des ersten optischen Systems zu nutzen. Darin sind mehrere den Lichtstrahlen zugeordnete optische Korrekturelemente vorgesehen, vorzugsweise eines je Lichtstrahl. Das zweite optische System wird zwischen dem ersten optischen System und dem Lichtsender beziehungsweise Lichtempfänger angeordnet, und zwar in einem Bereich ab einer Strahltrennungsebene, in der die Lichtstrahlen einander nicht überlappen. Die Strahltrennungsebene steht parallel zur Abbildungsebene des ersten optischen Systems und liegt vor der Abbildungsebene. Die Reihenfolge ist demnach erstes optisches System, Strahltrennungsebene, zweites optisches System und Lichtsender beziehungsweise Lichtempfänger, wobei das zweite optische System vorzugsweise schon in oder jedenfalls möglichst nahe der Strahltrennungsebene angeordnet ist.

Die Erfindung hat den Vorteil, dass eine günstige, leichte Sende- und/oder Empfangsoptik mit sehr guten optischen Eigenschaften möglich wird, die gezielt für den Zweck eines mehrstrahligen tastenden Systems mit einem Sichtfeld aus diskret angeordneten Feldpunkten ein aufwändiges und teures Objektiv ersetzt. Im Gegensatz zu dem herkömmlichen Objektiv versucht das zweite optische System keinesfalls, das gesamte Sichtfeld möglichst fehlerfrei abzubilden, sondern nur die ab der Strahltrennungsebene diskreten Teilbereiche der Lichtstrahlen. Dadurch entstehen zusätzliche Designfreiheitsgrade, mit denen die relevanten Fehler reduziert werden. Die Abbildungseigenschaften im Sichtfeld des ersten optischen Systems, die von keinen Lichtstrahlen durchsetzt sind, wären durch die Optimierung in aller Regel sogar besonders schlecht, aber das betrifft ungenutzte Sichtfeldbereiche des Sensors.

Die Lichtstrahlen sind vorzugsweise in einer Ebene angeordnet. Die Lichtstrahlen liegen demnach in einer Zeile oder Spalte. Das ist besonders geeignet für eine Scanbewegung quer zu dieser Zeile, die dann den Raumbereich dem Strahlabstand entsprechend gerastert abtastet.

Das erste optische System weist bevorzugt mindestens eine gemeinsame Linse auf. Es handelt sich folglich um ein refraktives erstes optisches System. Eine gemeinsame Linse bedeutet, dass alle Lichtstrahlen diese Linse durchlaufen.

Das erste optische System weist bevorzugt zwei Linsen auf, insbesondere eine sphärische Linse und eine asphärische Linse. Die beiden Linsen sind vorzugsweise jeweils plankonvex. Mit zwei Linsen können zumindest einige der Einschränkungen und Abbildungsfehler einer einzelnen Linse kompensiert werden. Ein hochwertiges Objektiv lässt sich aber aus zwei Linsen noch nicht aufbauen. Die ausreichende Abbildungsqualität des erfindungsgemäßen mehrstrahligen Sensors wird erst in Kombination mit dem zweiten optischen Element erreicht.

Das erste optische System ist vorzugsweise zur Korrektur von Koma und/oder sphärischer Aberration optimiert, und die Optimierung für eine verbesserte Korrektur von Koma und/oder sphärischer Aberration lässt eine Variation in der Schnittweite zu. Eine Variation in der Schnittweite bedeutet eine Bildfeldwölbung, die somit bei der Optimierung des ersten optischen Systems zumindest weitgehend unberücksichtigt bleibt oder sogar noch vergrößert wird. Die einzelnen Lichtstrahlen werden von dem ersten optischen System nicht in einer gemeinsamen Ebene abgebildet. Dafür können Koma und sphärische Aberration, erforderlichenfalls auch Farbfehler, besser kompensiert werden. Für die Bildfeldwölbung ist dann das zweite optische System zuständig.

Die optischen Korrekturelemente des zweiten optischen Systems sind vorzugsweise als Korrekturlinsen ausgebildet. Damit handelt es sich um ein refraktives zweites optisches System, und das es Linsen sind, auch nicht lediglich mit planen Ein- und Austrittsflächen. Eine der Seiten, beispielsweise die Rückseite, darf aber durchaus plan bleiben.

Die optischen Korrekturelemente weisen untereinander unterschiedliche optische Eigenschaften auf. Damit sind es keine gleichartigen optischen Korrekturelemente oder Korrekturlinsen, sondern weisen zueinander Unterschiede auf, etwa in Formgebung, Anordnung bezüglich des zugeordneten Lichtstrahls oder Material. Das zweite optische System wäre folglich nicht optisch gleichwirkend, wenn optische Korrekturelemente untereinander ihre Positionen tauschen würden.

Die optischen Korrekturelemente sind bevorzugt einzeln für den jeweiligen zugeordneten Lichtstrahl optimiert. Die Korrekturelemente sind gezielt an den ihnen zugeordneten Lichtstrahl angepasst. Diese Optimierungen sind deshalb untereinander entkoppelt, weil aufgrund der Position des zweiten optischen Systems in oder jenseits der Strahltrennungsebene die Lichtstrahlen bereits vereinzelt sind. Dadurch werden besonders gute Abbildungseigenschaften erzielt. Die Krümmungen oder Funktionsflächen der optischen Korrekturebene beziehen sich vorzugsweise nur auf eine Fläche, beispielsweise die Vorderseite, während die gegenüberliegende Fläche plan bleibt.

Die optischen Korrekturelemente sind bevorzugt in einer gemeinsamen Korrekturebene insbesondere parallel zur Strahltrennungsebene angeordnet. Das führt zu einer kompakten Anordnung und ermöglicht es, die optischen Korrekturelemente einfach zusammenzufassen und justiert einzubauen.

Das zweite optische System ist bevorzugt als gemeinsames Bauteil der optischen Korrekturelemente ausgebildet. Die jeweiligen optischen Korrekturelemente sind beispielsweise als mehrere Konturen oder Funktionsflächen ausgebildet. Besonders als Kunststoffbauteil ist eine sehr günstige Herstellung möglich, beispielsweise durch Spritzguss oder Abformen, wo dann Aufwand für die spezifische Formgebung nur für das Werkzeug entsteht.

Die optischen Korrekturelemente weisen bevorzugt eine Freiformfläche auf. Das gibt besonders viele Freiheitsgrade für die Optimierung. Bei Ausgestaltung des zweiten optischen Systems als gemeinsames Bauteil ergibt sich insgesamt eine Freiform mit jeweiligen Bereichen oder Funktionsflächen für die optischen Korrekturelemente. Erneut ist eine Herstellung aus Kunststoff aus einem Werkzeug mit besonders wenig Aufwand möglich.

Die optischen Korrekturelemente weisen bevorzugt in der Meridionalebene des ersten optischen Systems eine nicht symmetrische Kontur auf. Damit sind die optischen Korrekturelemente im Gegensatz zu üblichen Linsen auch nicht rotationssymmetrisch. Sofern in einer bevorzugten Ausführungsform die Feldpunkte in einer Ebene liegen, entspricht diese Ebene der Meridionalebene. Dagegen sind die optischen Korrekturelemente in der Sagittalebene vorzugsweise symmetrisch.

Das zweite optische System ist bevorzugt zur Korrektur von Bildfeldwölbung und/oder Astigmatismus ausgebildet. Das sind gerade diejenigen Abbildungsfehler, die im ersten optischen System nicht ausreichend korrigiert werden oder dort gezielt in Kauf genommen und eventuell sogar noch vergrößert werden. Wie schon erwähnt, erfolgt die Optimierung vorzugsweise einzeln und unabhängig für die jeweiligen optischen Korrekturelemente. Deshalb können die genannten Abbildungsfehler besonders effektiv kompensiert werden.

Der Sensor weist bevorzugt eine gekrümmte Frontscheibe auf, wobei das zweite optische System zusätzlich für eine Korrektur von Verzerrungen, insbesondere eines Astigmatismus', der Frontscheibe ausgebildet ist. Die Frontscheibe wurde einleitend kurz erwähnt. Sie weist insbesondere bei einem als Laserscanner ausgebildeten Sensor üblicherweise, aber nicht notwendig eine rotationssymmetrische Geometrie auf, ist beispielsweise ein Zylinder, Kegelstumpf, Kugelsegment oder Kelch. Jedenfalls zeigt sie eine Krümmung in der Sagittalebene, und dadurch erfahren die einzelnen Teilstrahlen im Lichtbündel der jeweiligen ausgesandten Lichtstrahlen und zurückkehrenden remittierten Lichtstrahlen unterschiedliche Ablenkungen, wobei dieser Effekt stark astigmatisch ist. Diese Verzerrungen durch die Frontscheibe können im Design der optischen Korrekturelemente zusätzlich berücksichtigt werden, indem insbesondere ein Astigmatismus der Frontscheibe zusätzlich zum Astigmatismus des ersten optischen Systems ausgeglichen wird. Das ist im Optikdesign lediglich eine Veränderung oder Verstärkung der ohnehin zu korrigierenden Abbildungsfehler. Die Herstellkosten für das zweite optische Element bleiben davon unberührt, die Korrektur der Verzerrungen der Frontscheibe wird praktisch ohne Zusatzaufwand erreicht. Die Korrektur ist zugleich sogar noch besser als bei bestehenden Lösungen, da sie an den einzelnen Lichtstrahlen ansetzen kann.

Vorzugsweise ist eine Blende mit je einer Blendenöffnung pro Empfangslichtstrahl zwischen dem zweiten optischen System und dem Lichtempfänger angeordnet. Die Blende befindet sich demnach aus Sicht der remittierten Lichtstrahlen hinter dem zweiten optischen Element. Die Blendenöffnungen können daher besonders klein sein, da durch das zweite optische Element ein nahezu punktförmiger Strahlquerschnitt aller remittierten Lichtstrahlen in derselben Ebene parallel zur Abbildungsebene erreicht wird. Damit wird Fremdlicht besonders wirksam unterdrückt.

Der Sensor ist bevorzugt als Laserscanner ausgebildet und weist eine bewegliche Ablenkeinheit auf, mit deren Hilfe die ausgesandten Lichtstrahlen periodisch durch den Überwachungsbereich geführt werden. Wie einleitend erläutert, tastet der Laserscanner mit der Bewegung der beweglichen Ablenkeinheit den Überwachungsbereich in mehreren Ebenen ab. Die Ablenkeinheit ist vorzugsweise in Form einer drehbaren Abtasteinheit ausgebildet, die praktisch einen beweglichen Messkopf bildet, in dem Lichtsender und/oder Lichtempfänger samt Empfangsoptik und gegebenenfalls auch zumindest Teile der Auswertungseinheit untergebracht sind.

Die Auswertungseinheit ist bevorzugt dafür ausgebildet, aus einer Lichtlaufzeit zwischen Aussenden der Lichtstrahlen und Empfangen der remittierten Lichtstrahlen einen Abstand der Objekte zu bestimmen. Der Sensor wird dadurch ein entfernungsmessender mehrstrahliger Sensor oder Laserscanner. Alternativ wird lediglich die Anwesenheit eines Objekts festgestellt und beispielsweise als Schaltsignal ausgegeben.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1 eine schematische Schnittdarstellung eines als Laserscanner ausgebildeten optoelektronischen Sensors;
Fig. 2 eine schematische Übersichtsdarstellung einer Empfangsoptik und der Strahlenverläufe darin;
Fig. 3 eine Darstellung der Strahlenverläufe in einem ersten optischen System der Empfangsoptik;
Fig. 4 eine vergrößerte Ansicht der Strahlenverläufe gemäß Figur 3 in einer Umgebung der Abbildungsebene;
Fig. 5 eine Ansicht ähnlich Figur 4, nun jedoch mit zusätzlichen Korrekturlinsen eines zweiten optischen Systems der Empfangsoptik;
Fig. 6a einen

mit dem korrigierenden zweiten optischen System.

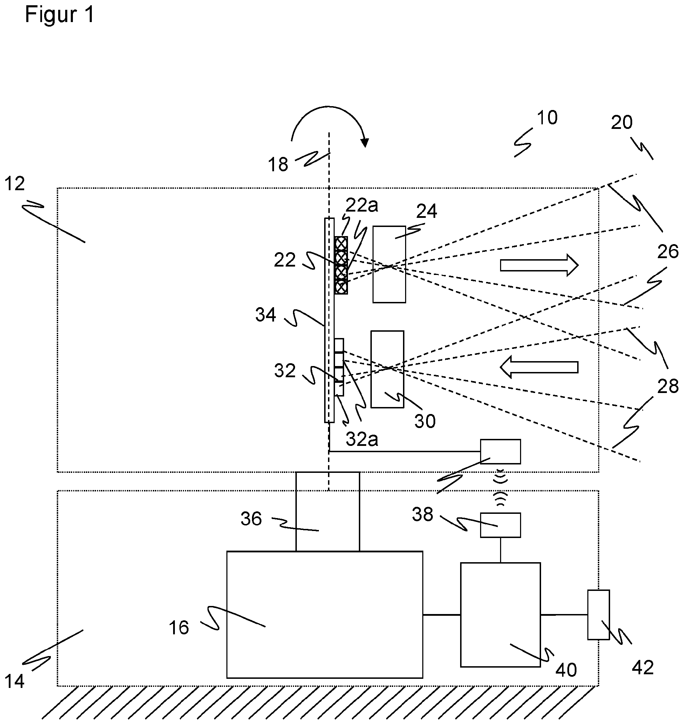

Figur 1 zeigt eine schematische Schnittdarstellung durch einen optoelektronischen Sensor 10 in einer Ausführungsform als Laserscanner. Der Sensor 10 umfasst in grober Aufteilung eine bewegliche Abtasteinheit 12 und eine Sockeleinheit 14. Die Abtasteinheit 12 ist der optische Messkopf, während in der Sockeleinheit 14 weitere Elemente wie eine Versorgung, Auswertungselektronik, Anschlüsse und dergleichen untergebracht sind. Im Betrieb wird mit Hilfe eines Antriebs 16 der Sockeleinheit 14 die Abtasteinheit 12 in eine Drehbewegung um eine Drehachse 18 versetzt, um so einen Überwachungsbereich 20 periodisch abzutasten.

In der Abtasteinheit 12 erzeugt ein Lichtsender 22 mit mehreren Lichtquellen 22a, beispielsweise LEDs oder Laser in Form von Kantenemittern oder VCSELs, mit Hilfe einer Sendeoptik 24 mehrere Sendelichtstrahlen 26 mit gegenseitigem Winkelversatz, die in den Überwachungsbereich 20 ausgesandt werden. In dem dargestellten Ausführungsbeispiel sind es vier Sendelichtstrahlen 26, aber diese Anzahl ist nicht festgelegt und die Erfindung darauf nicht beschränkt. Außerdem ist denkbar, dass es weniger Lichtquellen 22a als Sendelichtstrahlen 26 oder sogar nur eine einzige Lichtquelle gibt, indem den Lichtquellen 22a oder der Lichtquelle mindestens ein strahlteilendes oder mustererzeugendes Element nachgeordnet wird.

Treffen die Sendelichtstrahlen 26 in dem Überwachungsbereich 20 auf ein Objekt, so kehren entsprechende remittierte Lichtstrahlen als Empfangslichtstrahlen 28 zu dem Sensor 10 zurück. Die Empfangslichtstrahlen 28 werden von einer Empfangsoptik 30 auf einen Lichtempfänger 32 mit mehreren Lichtempfangselementen 32a geführt, die jeweils ein elektrisches Empfangssignal erzeugen. Die Lichtempfangselemente 32a können separate Bauteile oder Pixel einer integrierten Matrixanordnung sein, beispielsweise Photodioden, APDs (Avalanche Diode) oder SPADs (Single-Photon Avalanche Diode) beziehungsweise SiPM (Silicon Photomultiplier).

Lichtsender 22 und Lichtempfänger 32 sind in der in Figur 1 gezeigten Ausführungsform gemeinsam auf einer Leiterkarte 34 angeordnet, die auf der Drehachse 18 liegt und mit der Welle 36 des Antriebs 16 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 22 und Lichtempfänger 32 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 38 verbindet die bewegliche Abtasteinheit 12 mit der ruhenden Sockeleinheit 14. Dort befindet sich eine Steuer- und Auswertungseinheit 40, die zumindest teilweise auch auf der Leiterkarte 34 oder an anderem Ort in der Abtasteinheit 12 untergebracht sein kann. Die Steuer- und Auswertungseinheit 40 steuert den Lichtsender 22 und erhält die Empfangssignale des Lichtempfängers 32 zur weiteren Auswertung. Sie steuert außerdem den Antrieb 16 und erhält das Signal einer nicht gezeigten, von Laserscannern allgemein bekannten Winkelmesseinheit, welche die jeweilige Winkelstellung der Abtasteinheit 12 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen Empfangslichtstrahls 28 und dessen Erfassung in einem der Lichtempfangselemente 32a ebenfalls bekannt, so dass insgesamt ein dreidimensionaler Raumbereich abgetastet wird.

Damit sind die Objektpositionen beziehungsweise Objektkonturen bekannt und können über eine Sensorschnittstelle 42 ausgegeben werden. Die Sensorschnittstelle 42 oder ein weiterer, nicht gezeigter Anschluss dienen umgekehrt als Parametrierschnittstelle. Der Sensor 10 kann auch als Sicherheitssensor für einen Einsatz in der Sicherheitstechnik zur Überwachung einer Gefahrenquelle ausgebildet sein, wie sie beispielsweise eine gefährliche Maschine darstellt. Dabei wird ein Schutzfeld überwacht, das während des Betriebs der Maschine vom Bedienpersonal nicht betreten werden darf. Erkennt der Sensor 10 einen unzulässigen Schutzfeldeingriff, etwa ein Bein einer Bedienperson, so löst er einen Nothalt der Maschine aus. In der Sicherheitstechnik eingesetzte Sensoren 10 müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Insbesondere kann dann die Sensorschnittstelle 42 als sichere Ausgabeschnittstelle (OSSD, Output Signal Switching Device) ausgebildet sein, um bei einem Schutzfeldeingriff durch ein Objekt ein sicherheitsgerichtetes Abschaltsignal auszugeben.

Der Sensor 10 wird von einem nicht dargestellten Gehäuse geschützt, das im Durchtrittbereich für die Sendelichtstrahlen 26 und die Empfangslichtstrahlen 28 eine transparente Frontscheibe aufweist. Diese Frontscheibe hat typischerweise die Form eines Kegelstumpfmantels, eines Zylindermantels, etwas allgemeiner eines Rotationskörpers mit einer gekrümmten statt gerade Erzeugenden, die beispielsweise kelchförmig aussehen. Möglich sind auch Abschnitte einer Kugel oder eines Ellipsoids und ganz allgemein irgendeine geeignete, komplexe 3D-Freiform.

Während der Rotation des Sensors 10 wird durch jeden der Sendelichtstrahlen 26 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 20 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 26, die in unterschiedlichen Winkeln nach oben und unten abgelenkt werden, entsteht insgesamt als Abtastgebilde eine Art Schachtelung von mehreren Sanduhren. Auch diese Kegelmantelflächen werden hier manchmal vereinfachend als Abtastebenen bezeichnet.

Der dargestellte Sensor 10 ist ein Laserscanner mit rotierendem Messkopf, nämlich der Abtasteinheit 12. Dabei kann nicht nur ein Sende-Empfangsmodul mitrotieren wie hier dargestellt, es sind weitere derartige Module mit Höhenversatz oder einem Winkelversatz bezüglich der Drehachse 18 vorstellbar. Alternativ ist auch eine periodische Ablenkung mittels Drehspiegel oder einem Facettenspiegelrad denkbar. Bei mehreren Sendelichtstrahlen 26 ist dabei zu beachten, dass es von der jeweiligen Drehstellung abhängt, wie die mehreren Sendelichtstrahlen 26 in den Überwachungsbereich 20 fallen, denn deren Anordnung rotiert durch den Drehspiegel, wie bekannte geometrische Überlegungen ergeben. Eine weitere alternative Ausführungsform schwenkt die Abtasteinheit 12 hin und her, entweder anstelle der Drehbewegung oder zusätzlich um eine zweite Achse senkrecht zur Drehbewegung, um auch in Elevation eine Abtastbewegung zu erzeugen.

Auch die Ausführung als Laserscanner ist beispielhaft. Es ist stattdessen ein Mehrfachtaster ohne periodische Bewegung möglich, der dann praktisch nur aus der ruhenden Abtasteinheit 12 mit entsprechender Elektronik, jedoch ohne Sockeleinheit 14 besteht.

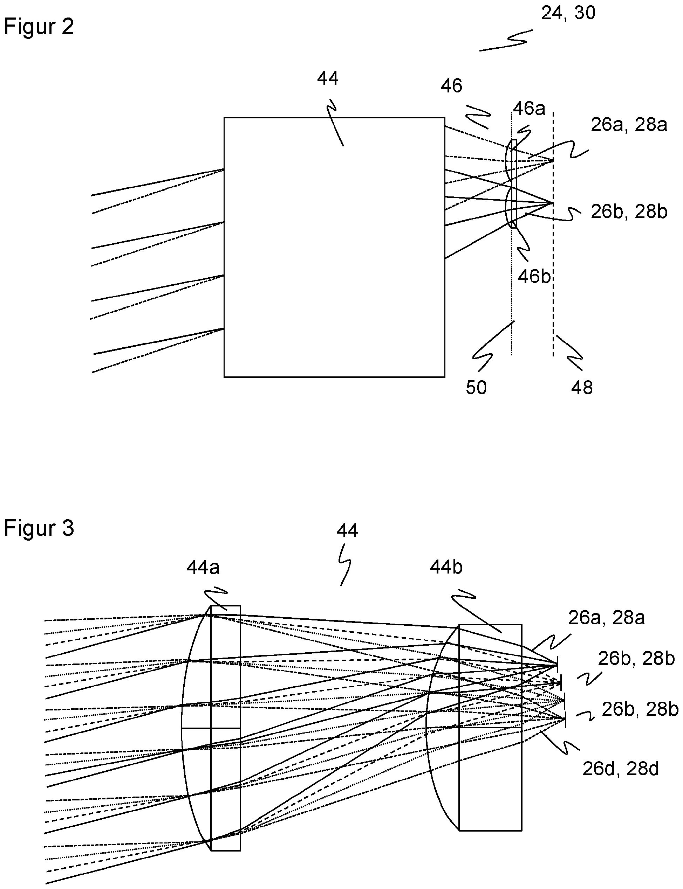

Figur 2 zeigt eine schematische Übersichtsdarstellung der Sendeoptik 24 oder Empfangsoptik 30, die erfindungsgemäß für ein diskretes Objekt- oder Bildfeld optimiert ist, nämlich die voneinander separierten Sendelichtstrahlen 26 und beziehungsweise Empfangslichtstrahlen 28. Eine solche Optik 24, 30 kann sende- oder empfangsseitig eingesetzt werden, oder es werden zwei derartige Optiken 24, 30 sende- und empfangsseitig eingesetzt. Es ist auch möglich, eine die Optik 24, 30 als gemeinsame Sende-/Empfangsoptik zu verwenden, insbesondere in koaxialer Anordnung des Sensors 10. Im Folgenden werden die Eigenschaften der Optik 24, 30 beschrieben, wobei meist nicht konkret Bezug auf den Einsatz als Sendeoptik 24 oder als Empfangsoptik 30 genommen wird.

Die Optik 24, 30 weist in grober Aufteilung ein erstes optisches System 44 und ein zweites optisches System 46 auf. Zu beachten ist, dass der gezeigte Empfangspfad zu Figur 1 gespiegelt dargestellt ist. Die erfindungsgemäß optimierte Optik 24, 30 nutzt aus, dass lediglich diskret angeordnete Feldpunkte scharf abgebildet werden müssen. Die Feldpunkte sind durch die gewünschte Abbildung beispielsweise von Lichtquellen 22a des Lichtsenders 22 oder in Blendenöffnungen eines nicht gezeigten Blendenarrays in der Abbildungsebene 48 der Optik 24, 30 definiert. Die Strahlbündel der jeweiligen benachbarten Feldpunkte, also die Sendelichtstrahlen 28a-b beziehungsweise Empfangslichtstrahlen 28a-b, sind ab einem gewissen Abstand vor der Abbildungsebene 48 räumlich voneinander getrennt. Der Bereich, ab dem diese Entkopplung erfolgt ist, liegt zwischen einer Strahltrennungsebene 50 und der Abbildungsebene 48. In Figur 2 sind dementsprechend die Lichtstrahlen 26a-b, 28a-b links von der Strahltrennungsebene 50 vermischt und rechts davon dann getrennt.

Innerhalb der Zone hinter der Strahltrennungsebene 50 besteht die Möglichkeit, dass Korrekturlinsen 46a-b des zweiten optischen Systems 46 das Strahlbündel eines Feldpunktes und damit einen zugeordneten Lichtstrahl 26a-b, 28a-b nominell punktgenau abbilden können. Damit dies möglich ist, müssen die Strahlen eines Strahlbündels bijektiv einer Position in der Eintrittspupille der jeweiligen Korrekturlinse 46a-b zugeordnet werden können. Diese Bedingung wird von den Abbildungsfehlern Bildfeldwölbung und Astigmatismus erfüllt. Daher können diese Abbildungsfehler besonders effizient von einer Korrekturlinse 46a-b kompensiert werden.

Die Korrekturlinsen 46a-b liegen vorzugsweise in einer gemeinsamen Korrekturlinsenebene parallel zu der Abbildungsebene 48. Um die Brechkraft der Korrekturlinsen 46a-b klein halten zu können, sollte der Abstand zur Abbildungsebene 48 möglichst groß sein, andererseits darf die Korrekturlinsenebene nicht vor der Strahltrennungseben 50 liegen, da sonst die Strahlbündel noch nicht getrennt sind. Damit ist die bevorzugte Position des zweiten optischen Systems 46 und seiner Korrekturlinsen 46a-b gerade in der Strahltrennungsebene, wie auch in Figur 2 gezeigt. Außerdem ist in diesem Zusammenhang vorteilhaft, das erste optische System bildseitig telezentrisch auszuführen.

Beim Design der Optik 24, 30 wird vorzugsweise zunächst das erste optische System 44 ohne zweites optisches System 46 und Korrekturlinsen 46a-b optimiert. Hierbei wird der Optimierungsprozess noch mit allen Feldpunkten durchgeführt. Die Schnittweite wird dabei für jeden Feldpunkt in gewissen Grenzen variabel gelassen, um Koma und sphärische Aberration möglichst effizient korrigieren zu können. Die variable Schnittweite entspricht der noch nicht kompensierten Bildfeldwölbung. Für die Korrektur von Bildfeldwölbung und auch Astigmatismus ist das zweite optische System 46 zuständig, dessen Korrekturlinsen 46a-b dann im nächsten Schritt einzeln optimiert werden. Das Optimierungsproblem ist entkoppelt, da die Strahlbündel getrennt sind. Vorzugsweise wird jeweils nur eine Oberfläche optimiert und die zweite Oberfläche bleibt plan.

Für die Optimierung können beispielsweise die folgenden Oberflächenformen beziehungsweise Höhenprofile verwendet werden:

$$s(r,\rho,\varphi)= \frac{cr^2}{1+\sqrt{1-(1+k)c^2r^2}} + \sum_{i=1}^{N} A_i Z_i(\rho,\varphi)$$

oder

$$s(r,x,y)= \frac{c_x r^2 + c_y r^2}{1+\sqrt{1-(1+k_x)c_x^2 r^2 - (1+k_y)c_y^2 r^2}} + \sum_{i,j=0}^{N} A_{i,j} x^i y^j.$$

Der Ursprung zur Beschreibung der jeweiligen Oberfläche entspricht dem Durchstoßpunkt des Hauptstrahls, bezogen auf das optische Hauptsystem des jeweiligen Strahlbündels, durch die Planfläche der Korrekturlinse. $Z_i$ bezeichnet das i-te Zernike-Polynom (s. "Zernike Standard Polynomials": Noll, R. J. (1976). "Zernike polynomials and atmospheric turbulence" . J. Opt. Soc. Am. 66 (3): 207).

Zu optimieren sind die Parameter: $c$, $k$ und $A_i$ bzw. $c_x$, $c_y$, $k_x$, $k_y$ und $A_{i,j}$. In dem nachfolgenden Designbeispiel sollen vier diskrete Feldwinkel oder Sendelichtstrahlen 28a-d beziehungsweise Empfangslichtstrahlen 28a-d mit einem beispielhaften Winkel in Elevation von 2,25° / 6,5° /10,75° / 15° bei einem Objektabstand im Unendlichen abgebildet werden. Der Sensor 10 befindet sich in einem Gehäuse mit einer Frontscheibe, deren Astigmatismus mit korrigiert werden kann.

Figur 3 zeigt eine Ausführungsform des ersten optischen Systems 44 mit hier beispielhaft zwei Linsen 44a-b. Die Aufgabe des vorgelagerten ersten optischen Systems 44 ist es, Koma, sphärische Aberration und, falls notwendig, Farbfehler so gut wie möglich zu korrigieren. Koma und sphärische Aberration lassen sich durch die Korrekturlinsen 46a-b nur eingeschränkt kompensieren, denn sie führen bei stark ausgeprägten Fehlern zu einer mehrdeutigen Zuordnung von Strahl zur Pupillenkoordinate, d.h. mehrere Strahlen können einer Pupillenkoordinate zugeordnet werden.

Die beiden Linsen 44a-b des ersten optischen Systems können mit einer vereinfachten radialsymmetrischen Form designt werden:

$$s(r) = \frac{cr^2}{1+\sqrt{1-(1+k)c^2r^2}}.$$

Die erste Linse 44a ist beispielsweise eine plankonvexe Asphäre, die zweite Linse 44b plankonvexe Sphäre mit k=0. Wie oben beschrieben, wurde die Schnittweite während dieser Optimierung des ersten optischen Systems 44 für die einzelnen Feldwinkel oder Sendelichtstrahlen 26a-d beziehungsweise Empfangslichtstrahlen 28a-b in gewissen Grenzen variabel gelassen, um die Öffnungsfehler Koma und sphärische Aberration möglichst effizient korrigieren zu können. Dementsprechend liegen die auf der rechten Seite der Figur 3 angedeuteten Positionen des Lichtsenders 22 beziehungsweise des Lichtempfängers 32 noch nicht in einer gemeinsamen Ebene.

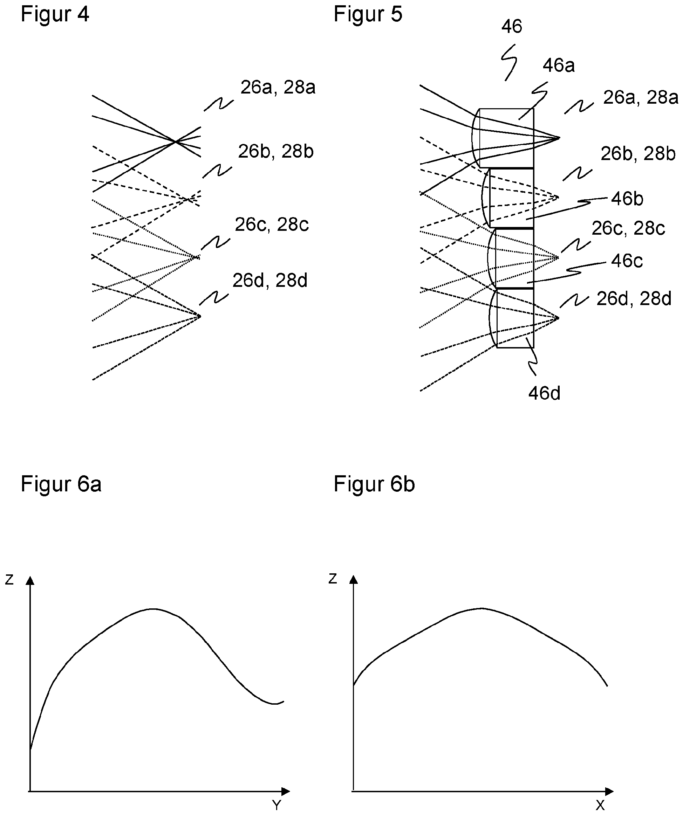

Figur 4 zeigt diesen Bereich in der Umgebung der hier der Übersicht halber nicht erneut eingezeichneten Abbildungsebene 48 und Strahltrennungsebene 50 nochmals vergrößert. Es ist deutlich zu erkennen, dass die Lichtstrahlen 26a-d, 28a-d auf unterschiedliche Abstände gebündelt werden. Ein Array von Lichtquellen 22a oder ein Blendenarray beziehungsweise ein Lichtempfänger 32 ohne Krümmung könnte hier nur in einer Lage angeordnet werden, in dem mindestens ein Lichtstrahl 26a-d, 28a-d einen vergrößerten Strahlquerschnitt aufweist.

Figur 5 zeigt diese Umgebung nun mit den einzeln für jeden Feldwinkel optimierten Korrekturlinsen 46a-d des zweiten optischen Systems 46. Bildfeldwölbung und Astigmatismus sind nun korrigiert. Die Lichtstrahlen 26a-d, 28a-d sind in einer gemeinsamen Ebene praktisch auf einen Bildpunkt gebündelt. Dementsprechend werden Lichtquellen 22a oder Lichtquellpunkte nach einer Strahlteilung besonders scharf abgebildet, und insbesondere empfangsseitig kann hier eine Blende mit besonders kleinen Blendenöffnungen angeordnet werden, beziehungsweise es entstehen in einer Ausführungsform ohne Blende scharfe Empfangslichtflecken auf dem Lichtempfänger 32.

Da alle Korrekturlinsen 46a-d in einer Ebene angeordnet werden können, besteht die Möglichkeit, sie in einem Funktionselement zusammenzufassen. Das zweite optische System 46 kann dann als vergleichsweise billiges und leichtes spritzgegossenes Kunststoffteil mit mehreren unterschiedlichen optischen Funktionsflächen hergestellt werden, die jeweils einem Feldpunkt zugeordnet sind.

Die Figuren 6a-b zeigen einen beispielhaften Konturverlauf einer Korrekturlinse 46a in einem Schnitt in der mit Y bezeichneten Meridionalebene beziehungsweise der mit X bezeichneten Sagittalebene. Die Z-Richtung bezeichnet die Höhe des Konturverlaufs. Der Maßstab in Z-Richtung ist ein größerer als in X- und Y-Richtung, um die Krümmung deutlicher kenntlich zu machen. Das Höhenprofil ist typischerweise nicht rotationssymmetrisch insbesondere in der Meridionalebene. Es sei daran erinnert, dass die Korrekturlinsen 46a einzeln optimiert werden und daher die Kontur nicht für alle Korrekturlinsen 46a-d gelten kann. Der qualitative, nicht-rotationssymmetrische Konturverlauf ist jedoch je nach konkreten Rahmenbedingungen übertragbar.

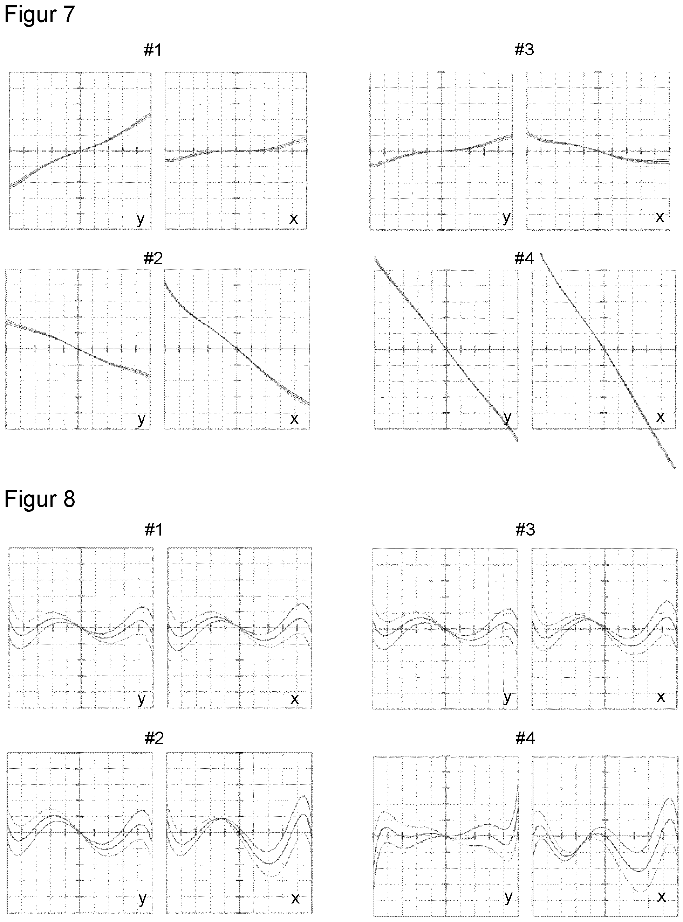

Figur 7 zeigt Ray-Fan-Plots für die vier Lichtstrahlen 26a-d, 28a-d an der Lichtsenderbeziehungsweise Blendenoder Lichtempfängerposition zunächst zum Vergleich in einer Situation ohne die Korrekturlinsen 46a-d, also allein mit dem ersten optischen System 44. Die verbleibenden Restfehler nach Optimierung des ersten optischen Systems 44 sind der Astigmatismus insbesondere der Frontscheibe und die Bildfeldwölbung

Figur 8 zeigt entsprechende Ray-Fan-Plots für die vier Lichtstrahlen 26a-d, 28a-d nun in einer Situation mit zweitem optischem System 46 und dessen optimierten Korrekturlinsen 46a-d. Zu beachten ist, dass die Ordinate um einen Faktor zehn feiner skaliert ist als in Figur 7. Die Restfehler sind um mehr als eine Größenordnung kleiner. Lediglich der Farbfehler wird nicht weiter reduziert, da sich dies prinzipbedingt durch die Korrekturlinsen 46a-d nicht auffangen lässt. Der thermische Einfluss der Funktionsflächen ist marginal, da die Brechkräfte der Korrekturlinsen 46a-d gering sind.

Das Fehlen astigmatischer Fehleranteile zeigt die effiziente Korrektur des optischen Einflusses der Frontscheibe. Dies liegt an der oben beschriebenen bijektiven Abbildungseigenschaft der Korrekturlinsen 46a-d. Wird beispielsweise stattdessen der Astigmatismus der Frontscheibe durch eine bikonische Linse durchgeführt, ist diese Bijektivität nicht mehr gegeben, da hier ein Punkt auf der Kontur der Linse die Richtung von Strahlen mehrerer Feldwinkel korrigieren muss. Das Optimierungsproblem ist dann überbestimmt. Der Astigmatismus der Frontscheibe wird folglich durch das zweite optische System 46 nicht nur praktisch ohne Zusatzaufwand, sondern auch besonders genau korrigiert.

**Patentansprüche**

1. Optoelektronischer Sensor (10) zur Erfassung von Objekten in einem Überwachungsbereich (20), der mindestens einen Lichtsender (22) zum Aussenden mehrerer voneinander separierter Lichtstrahlen (26a-d), eine Sendeoptik (24) für die ausgesandten Lichtstrahlen (26a-d), mindestens einen Lichtempfänger (32) zum Erzeugen eines jeweiligen Empfangssignals aus den von Objekten remittierten Lichtstrahlen (28a-d), eine Empfangsoptik (30) für die remittierten Lichtstrahlen (28a-d) und eine Steuer- und Auswertungseinheit (40) zur Gewinnung von Informationen über die Objekte aus den Empfangssignalen aufweist, wobei die Sendeoptik (24) und/oder die Empfangsoptik (30) ein erstes optisches System (44) aufweist,

**dadurch gekennzeichnet,**

**dass** die Sendeoptik (24) und/oder die Empfangsoptik (30) ein zweites optisches System (46) zur Korrektur von Abbildungsfehlern mit mehreren optischen Korrekturelementen (46a-d) aufweist, die jeweils einem Lichtstrahl (26a-d, 28a-d) zugeordnet sind, und dass das zweite optische System (46) zwischen einer Strahltrennungsebene (50), ab der die Lichtstrahlen (26a-d, 28a-d) aufgrund der optischen Wirkung des ersten optischen Systems (44) einander nicht überlappen, und dem Lichtsender (22) und/oder Lichtempfänger (32) angeordnet ist.

2.  Sensor (10) nach Anspruch 1,
    wobei die Lichtstrahlen (26a-d, 28a-d) in einer Ebene angeordnet sind.

3.  Sensor (10) nach Anspruch 1 oder 2,
    wobei das erste optische System (44) mindestens eine gemeinsame Linse (44a-b) aufweist und/oder wobei das erste optische System (44) zwei Linsen (44a-b) aufweist, insbesondere eine sphärische Linse (44a) und eine asphärische Linse (44b).

4.  Sensor (10) nach einem der vorhergehenden Ansprüche,
    wobei das erste optische System (44) zur Korrektur von Koma und/oder sphärischer Aberration optimiert ist und die Optimierung für eine verbesserte Korrektur von Koma und/oder sphärischer Aberration eine Variation in der Schnittweite zulässt.

5.  Sensor (10) nach einem der vorhergehenden Ansprüche,
    wobei die optischen Korrekturelemente (46a-d) des zweiten optischen Systems (46) als Korrekturlinsen ausgebildet sind.

6.  Sensor (10) nach einem der vorhergehenden Ansprüche,
    wobei die optischen Korrekturelemente (46a-d) untereinander unterschiedliche optische Eigenschaften aufweisen und/oder wobei die optischen Korrekturelemente (46a-d) einzeln für den jeweiligen zugeordneten Lichtstrahl (26a-d, 28a-d) optimiert sind.

7.  Sensor (10) nach einem der vorhergehenden Ansprüche,
    wobei die optischen Korrekturelemente (46a-d) in einer gemeinsamen Korrekturebene insbesondere parallel zur Strahltrennungsebene (50) angeordnet sind.

8.  Sensor (10) nach einem der vorhergehenden Ansprüche,
    wobei das zweite optische System (46) als gemeinsames Bauteil der optischen Korrekturelemente (46a-d) ausgebildet ist.

9.  Sensor (10) nach einem der vorhergehenden Ansprüche,
    wobei die optischen Korrekturelemente (46a-d) eine Freiformfläche aufweisen.

10. Sensor (10) nach einem der vorhergehenden Ansprüche,
    wobei das zweite optische System (46) zur Korrektur von Bildfeldwölbung und/oder Astigmatismus ausgebildet ist.

11. Sensor (10) nach einem der vorhergehenden Ansprüche,
    der eine gekrümmte Frontscheibe aufweist, und wobei das zweite optische System (46) zusätzlich für eine Korrektur von Verzerrungen, insbesondere eines Astigmatismus, der Frontscheibe ausgebildet ist.

12. Sensor (10) nach einem der vorhergehenden Ansprüche,
    wobei eine Blende mit je einer Blendenöffnung pro remittiertem Lichtstrahl (28a-d) zwischen dem zweiten optischen System (44) und dem Lichtempfänger (32) angeordnet ist.

13. Sensor (10) nach einem der vorhergehenden Ansprüche,
    der als Laserscanner ausgebildet ist und eine bewegliche Ablenkeinheit (12) aufweist, mit deren Hilfe die ausgesandten Lichtstrahlen (26a) periodisch durch den Überwachungsbereich (20) geführt werden, wobei insbesondere die Ablenkeinheit (12) in Form einer drehbaren Abtasteinheit ausgebildet ist, in welcher Lichtsender (22) und/oder der Lichtempfänger (32) untergebracht ist

**14.** Sensor (10) nach einem der vorhergehenden Ansprüche,
wobei die Auswertungseinheit (40) dafür ausgebildet ist, aus einer Lichtlaufzeit zwischen Aussenden der Lichtstrahlen (26a-d) und Empfangen der remittierten Lichtstrahlen (28a-d) einen Abstand der Objekte zu bestimmen.

**15.** Verfahren zur Erfassung von Objekten in einem Überwachungsbereich (20), bei dem von einem Lichtsender (22) mehrere voneinander separierte Lichtstrahlen (26a-d) durch eine Sendeoptik (24) ausgesandt werden, aus den von Objekten zurückgeworfenen Lichtstrahlen (28a-d) nach Durchlaufen einer Empfangsoptik (30) in einem Lichtempfänger (32) ein jeweiliges Empfangssignal erzeugt wird und die Empfangssignale ausgewertet werden, um Informationen über die Objekte zu gewinnen, wobei die Sendeoptik (24) und/oder die Empfangsoptik (30) ein erstes optisches System (44) aufweist,
**dadurch gekennzeichnet,**
**dass** die Lichtstrahlen (26a-d, 28a-d) das erste optische System (44) und jeweils eines von mehreren optischen Korrekturelementen (46a-d) eines zweiten optischen Systems (46) zur Korrektur von Abbildungsfehlern durchlaufen, wobei das zweite optische System (46) zwischen einer Strahltrennungsebene (50), ab der die Lichtstrahlen (26a-d, 28a-d) aufgrund der optischen Wirkung des ersten optischen Systems (44) einander nicht überlappen, und dem Lichtsender (22) und/oder Lichtempfänger (32) angeordnet ist.

Figur 1

Figur 2

24, 30

44

46

46a

26a, 28a

26b, 28b

46b

50          48

Figur 3

44

44a                44b

26a, 28a

26b, 28b

26b, 28b

26d, 28d

Figur 4

26a, 28a

26b, 28b

26c, 28c

26d, 28d

Figur 5

46

46a

26a, 28a

26b, 28b

46b

26c, 28c

46c

26d, 28d

46d

Figur 6a

Figur 6b

Figur 7

#1

#3

#2

#4

Figur 8

#1

#3

#2

#4

Europäisches Patentamt

European Patent Office

Office européen des brevets

## EUROPÄISCHER RECHERCHENBERICHT

**Nummer der Anmeldung**

EP 20 19 6561

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2018/329061 A1 (PACALA ANGUS [US] ET AL) 15. November 2018 (2018-11-15) * Absätze [0008] - [0015], [0070], [0128], [0133], [0151], [0152]; Abbildungen 14,15A,15B,15C * ----- | 1-15 | INV. G01S7/481 G01S17/42 |
| A | JP 2010 109096 A (NIKON CORP) 13. Mai 2010 (2010-05-13) * Absätze [0011], [0012], [0019]; Abbildungen 1,2,3 * ----- | 4,6,10 | |

**RECHERCHIERTE SACHGEBIETE (IPC)**

G01S

Der vorliegende Recherchenbericht wurde für alle Patentansprüche erstellt

| Recherchenort | Abschlußdatum der Recherche | Prüfer |
|---|---|---|
| München | 15. Februar 2021 | Grübl, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 6561

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-02-2021

| Im Recherchenbericht angeführtes Patentdokument | Datum der Veröffentlichung | Mitglied(er) der Patentfamilie | Datum der Veröffentlichung |
|---|---|---|---|
| US 2018329061 A1 | 15-11-2018 | AU 2018269000 A1 | 16-01-2020 |
| | | CA 3063605 A1 | 22-11-2018 |
| | | CN 110914652 A | 24-03-2020 |
| | | CN 111273256 A | 12-06-2020 |
| | | EP 3615901 A1 | 04-03-2020 |
| | | JP 2020521954 A | 27-07-2020 |
| | | KR 20200007031 A | 21-01-2020 |
| | | TW 201907140 A | 16-02-2019 |
| | | US 2018329035 A1 | 15-11-2018 |
| | | US 2018329060 A1 | 15-11-2018 |
| | | US 2018329061 A1 | 15-11-2018 |
| | | US 2018329062 A1 | 15-11-2018 |
| | | US 2018329065 A1 | 15-11-2018 |
| | | US 2019146088 A1 | 16-05-2019 |
| | | WO 2018213200 A1 | 22-11-2018 |
| JP 2010109096 A | 13-05-2010 | JP 5272652 B2 | 28-08-2013 |
| | | JP 2010109096 A | 13-05-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19757849 B4
- DE 102015121839 A1
- US 8767190 B2
- EP 3182153 B1
- JP 2007094168 A
- DE 102018125826
- US 20170289524 A1
- DE 102018109544
- DE 102018118653
- DE 102017129100 A1
- EP 19158884

**In der Beschreibung aufgeführte Nicht-Patentliteratur**

- **NOLL, R. J.** *Zernike Standard Polynomials,* 1976
- Zernike polynomials and atmospheric turbulence. *J. Opt. Soc. Am.,* vol. 66 (3), 207